# FASCICULE DE BREVET EUROPEEN

(11) **EP 0 824 410 B1**
(45) Date de publication et mention de la délivrance du brevet: **20.10.1999**
(21) Numéro de dépôt: 96914923.6
(22) Date de dépôt: 16.04.1996
(51) Int. Cl.: B60C 25/132, B60C 25/14

(54) **MACHINE POUR ET PROCEDE DE MISE EN PLACE DE BOURRELETS DE PNEUMATIQUE**
GERÄT UND VERFAHREN ZUM ANBRINGEN VON REIFENWÜLSTEN
PROCESS AND MACHINE FOR FITTING TYRE BEADS

(30) Priorité: 26.04.1995 FR 9505098
(43) Date de publication de la demande: 25.02.1998
(73) Titulaire: COMPAGNIE GENERALE DES ETABLISSEMENTS MICHELIN - MICHELIN & CIE, 63040 Clermont-Ferrand Cédex (FR)
(72) Inventeur: PATTE, Bernard, F-63122 Ceyrat (FR); WROBEL, Antoine, F-63370 Lempdes (FR)
(74) Mandataire: Devaux, Edmond-Yves
(86) Numéro de dépôt international: EP9601589
(87) Numéro de publication internationale: WO9633877

(56) Documents cités:
- DE-A- 3 442 561
- DE-A- 4 003 848
- GB-A- 819 878
- GB-A- 2 104 460
- US-A- 4 947 919

## Description

La présente invention concerne une machine demise en place des bourrelets de pneumatique. Elle concerne aussi un procédé utilisant ladite machine.

Les conditions dans lesquelles sont appelés à rouler les pneumatiques deviennent de plus en plus sévères, et quelles que soient lesdites conditions, les bourrelets d'un pneumatique se doivent d'être mis en place correctement sur les sièges de sa jante de montage. Leur serrage sur sièges devient de plus en plus important, et le montage d'un pneumatique sur sa jante devient de plus en plus difficile, même dans le cas de l'emploi de machines de montage. Les mauvais montages observés se traduisent par des mises en place défectueuses des bourrelets, les sièges de bourrelets n'étant pas sur toute leurs surfaces en appui sur les sièges de jante. Ces mises en place défectueuses peuvent occasionner le cas échéant des délogements de bourrelets.

Afin de ne pouvoir livrer aux constructeurs de voitures que des ensembles montés où les pneumatiques ont des bourrelets correctement mis en place, la demande japonaise JP 64/03683 décrit un procédé de mise en place des bourrelets de pneumatique consistant à exercer une pression sur les deux flancs du pneumatique gonflé, de manière à décoller les bourrelets des rebords et sièges de jante, la pression interne du pneumatique les remettant en place de manière correcte dès que la force de pression sur les flancs est supprimée. Les dispositifs prévus pour appliquer une telle pression sur les flancs comportent soit deux viroles, chaque virole étant placée d'un côté du pneumatique, soit des roulettes, chaque roulette effectuant un trajet circulaire sur chaque flanc du pneumatique. La demande DE 3,442,561 décrit le même procédé et le même appareillage que la demande ci-dessus.

Un tel dispositif est avantageux lorsqu'il s'agit d'effectuer la mise en place de bourrelets de pneumatiques de même dimension ou du moins de pneumatiques présentant des largeurs axiales maximales sensiblement à la même distance radiale de l'axe de rotation. Etant donnée la multiplicité des dimensions de pneumatiques et de roues existantes, étant donnée l'accélération du nombre des dimensions crées, étant données la multiplicité des architectures utilisées dans lesdites dimensions et la multiplicité des raideurs de flancs qui en résultent, les dispositifs connus ne permettent pas une utilisation rationnelle et rentable pour la finition d'ensembles montés et livrables aux constructeurs.

Afin de remédier aux inconvénients ci-dessus, la machine, pour la mise en place correcte des bourrelets d'un pneumatique monté sur sa jante de service et gonflé et utilisant le principe consistant à appliquer sur chaque flanc dudit pneumatique une force de compression, est, conformément à l'invention, caractérisée en ce qu'elle comporte deux plateaux respectivement supérieur et inférieur munis chacun d'au moins deux viroles cylindriques coaxiales de diamètres différents et mobiles axialement de manière indépendante ainsi que des moyens qui, en fonction de la dimension du pneumatique de l'ensemble monté à traiter, permettent d'une part la sélection, parmi l'ensemble des viroles supérieures et inférieures, des deux viroles appropriées respectivement du plateau supérieur et du plateau inférieur et d'autre part le réglage de la distance axiale entre les deux viroles sélectionnées agissant sur les flancs opposés du pneumatique, distance nécessaire et suffisante pour la compréssion voulu desdits flancs.

Par direction axiale, il faut entendre la direction commune des axes des viroles cylindriques, qui est aussi direction de l'axe de l'ensemble monté à traiter.

Les moyens permettant la sélection et le réglage peuvent être en premier lieu des moyens d'identification de l'ensemble monté à traiter. Ces moyens peuvent être visuels et humains, ils peuvent aussi consister en un système de lecture permettant le déchiffrage d'un code, porté sur le pneumatique ou introduit à l'intérieur du pneumatique et/ou de la jante, ou en un système permettant la reconnaissance de mesures dimensionnelles.

Le dispositif comprendra de manière avantageuse une unité centrale de traitement et de commande. Les moyens de cette unité pour traiter les données, obtenues par lecture par exemple, sont des moyens de réception, et de comparaison des données prélevées avec des données de mise en oeuvre du dispositif préétablies et mémorisées. Ces données préétablies sont en particulier l'identification des viroles qu'il faut sélectionner, ainsi que la distance axiale entre virole inférieure et virole supérieure qu'il faut respecter en fonction de la dimension à traiter. L'unité centrale comprend aussi les moyens permettant la commande des dispositifs de mise en place des viroles sélectionnées par rapport aux autres viroles, ainsi que des dispositifs de réglage de la distance axiale sélectionnée entre les viroles sélectionnées.

La machine, conforme à l'invention, comprendra avantageusement des moyens d'acheminement et d'évacuation des ensembles montés à traiter, lesdits ensembles étant sur lesdits moyens soumis à un précentrage ainsi qu'à un centrage par rapport aux deux viroles sélectionnées au moyen d'un système de centrage et de maintien de l'ensemble monté.

Le procédé, conforme à l'invention et destiné à la mise en place correcte des bourrelets d'un pneumatique gonflé au moyen du dispositif décrit ci-dessus, est caractérisé en ce que :
- l'on identifie l'ensemble monté appelé à être traité,
- l'on sélectionne les viroles inférieure et supérieure, et la distance axiale entre les deux viroles qui devra exister lors de la mise en compression des flancs du pneumatique de l'ensemble monté,
- l'on achemine et centre l'ensemble monté de manière à ce que son axe de rotation coïncide avec l'axe commun des viroles inférieure et supérieure sélectionnées, ledit ensemble étant maintenu dans l'espace, par l'intermédiaire de la bande de roulement du pneumatique et/ou de la roue,
- l'on met en place la virole axialement supérieure et l'on déplace axialement la virole inférieure de manière à comprimer les deux flancs du pneumatique pendant un temps donné,
- l'on écarte les viroles, repose l'ensemble monté sur la table d'évacuation, et évacue l'ensemble.

La machine conforme à l'invention permet la sélection des viroles inférieure et supérieure de diamètres différents, sélection utile dans le cas où le pneumatique de l'ensemble monté à traiter a des flancs et/ou bourrelets présentant une dissymétrie, par exemple par les hauteurs, et/ou par les profils et/ou par les raideurs, mais la sélection concerne généralement deux viroles de diamètres identiques.

Les caractéristiques et avantages de l'invention seront mieux compris à l'aide de la description qui suit et qui se référe au dessin illustrant à titre non limitatif un exemple du dispositif conforme à l'invention, dessin sur lequel :

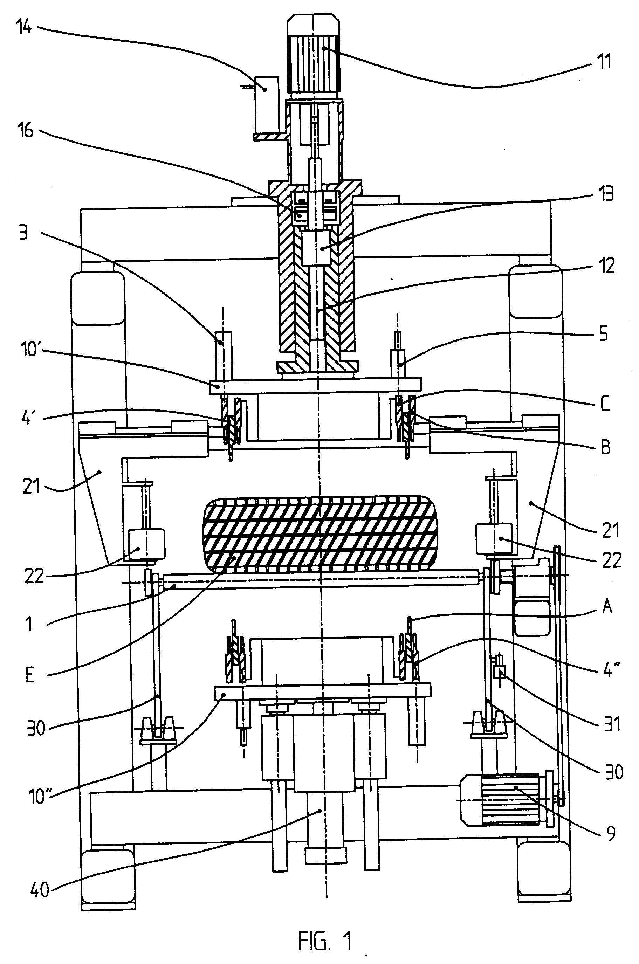

- la figure 1 représente schématiquement une vue de face du dispositif,

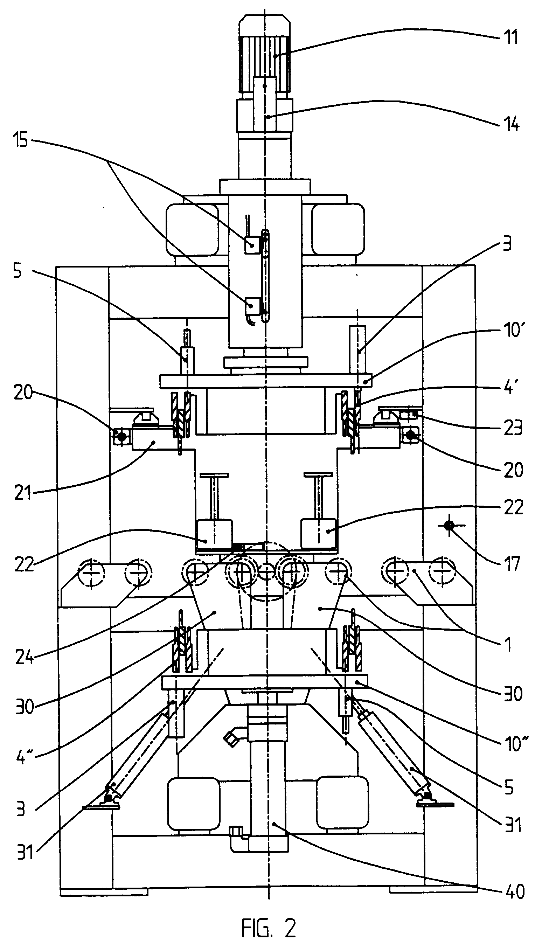

- la figure 2 représente schématiquement une vue de profil du même dispositif,
- la figure 3 représente schématiquement le système de préhension et de maintien de l'ensemble monté, avant la mise en compression des flancs,
- la figure 4 représente schématiquement le verrouillage des viroles après sélection du jeu de viroles approprié.

Les pneumatiques sont montés sur leurs jantes de service respectives, gonflés à une pression supérieure à leurs pressions nominales de gonflage, dont la valeur peut être dictée par les constructeurs intéressés, et forment ainsi les ensembles montés E. Lesdits ensembles E sont déplacés en position horizontale sur un convoyeur à rouleaux (1), rouleaux mis en mouvement par un moteur asynchrone (9). Ce convoyeur (1) peut être muni d'un dispositif de positionnement consistant en deux bras pivotants animés par un système de vérins pneumatiques commandés de manière adéquate, un tel dispositif permettant l'alignement de l'ensemble dans le sens longitudinal.

L'ensemble monté E, avec un pneumatique à flancs symétriques dans le cas décrit, est identifié par un code. Le code comprend les informations nécessaires aussi bien sur les caractéristiques dimensionnelles de l'ensemble que sur les caractéristiques de raideur des flancs du pneumatique, que cette raideur soit structurelle ou pneumatique. Dans le cas de l'exemple décrit, le code, formé de six chiffres, est lu par un opérateur humain. Il est évident que tout autre système de marquage et de lecture dudit marquage peut être utilisé : un message code en barres peut être optiquement interprété par un lecteur approprié consistant en un scanner (laser ou infrarouge) transformant en signaux électriques la réflexion de lumière ; un matériau paramagnétique peut être incorporé dans ou sur le pneumatique, après avoir été soumis à un champ magnétique, une tête de lecture détecte le magnétisme retenu par chaque partie de matériau préalablement utilisé; les marquages en creux et reliefs sur un flanc de pneumatique peuvent être, après illumination appropriée, captés optiquement; l'ensemble monté peut aussi être identifié par une mesure automatique de côtes dimensionnelles telles que diamètres et/ou largeurs (du pneumatique, de la roue).

Le code est transféré sous forme de signal à l'unité de traitement ou automate U (non montré) à base de microprocesseurs, programmable et programmé à l'aide de logiciels appropriés, et qui, après comparaison avec les données mémorisées concernant les trois jeux de viroles A, B, C, inférieure et supérieure, envoie un signal électrique aux électrovannes qui commandent les distributeurs afférents aux 6 vérins (3) pneumatiques et électromagnétiques, servant à actionner le déplacement vertical du jeu A de viroles (4) sélectionnées. Chaque virole (4), quelle soit inférieure ou supérieure, est en effet animée par trois vérins (3) équidistants circonférentiellement. Les deux viroles (4) du jeu A sélectionné, déplacées axialement par rapport aux quatre viroles des deux autres jeux B et C, sont guidées dans leur déplacement par des moyens de guidage qui peuvent être, comme dans l'exemple étudié, des douilles à billes (5).

L'unité de traitement U détermine aussi, en fonction du code reçu, la distance axiale qui devra exister entre les deux viroles inférieure et supérieure du jeu sélectionné pour la mise en compression correcte des deux flancs du pneumatique de l'ensemble traité. Il faut entendre par jeu de viroles A, l'ensemble des deux viroles de diamètres identiques respectivement du plateau inférieur et du plateau supérieur, et la distance axiale entre deux viroles inférieure et supérieure, quelsque soient les jeux auxquels elles appartiennent, est mesuré selon la direction axiale.

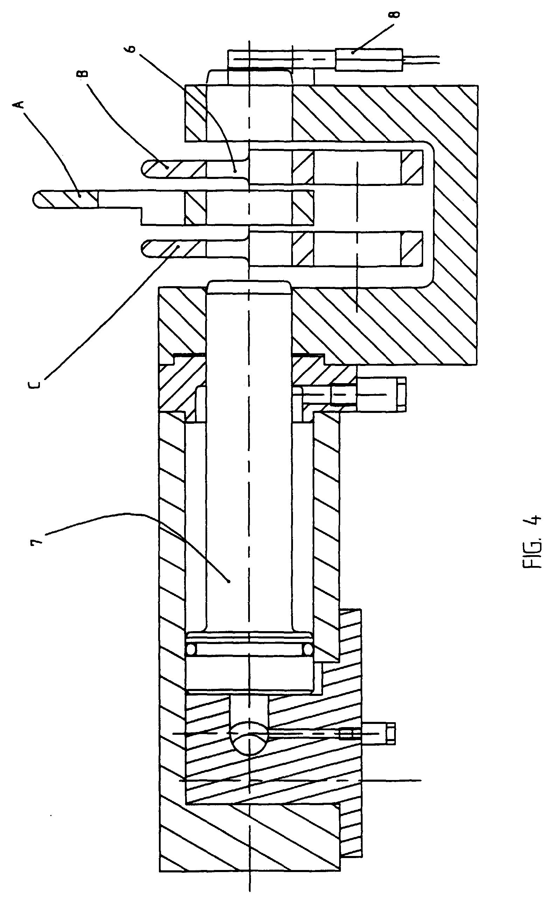

Lorsque le jeu A de viroles (4) adéquate a été déplacé axialement par rapport aux deux autres de la hauteur suffisante pour que ces deux seules viroles (4) puissent agir sur les flancs du pneumatique, toutes les viroles, étant munies d'orifices de blocage (6) (figure 4) sur leur périphérie, sont alors verrouillées au moyen d'un jeu de vérins (7) pneumatiques (au nombre de trois vérins répartis circonférentiellement) pénétrant dans les orifices (6) prévus à cet effet. Des détecteurs magnétiques (8) permettent de contrôler l'efficacité du verrouillage des viroles.

Les moyens de déplacement (3) et de guidage (5) des viroles(4) choisies sont solidaires d'un plateau (10), et le plateau supérieur (10'), équipé des trois viroles supérieures (4'), est réglable axialement. Etant donné que le plateau inférieur (10''), équipé des trois viroles inférieures (4''), effectue un trajet axial de distance constante lors de la mise en compression des flancs du pneumatique, c'est le réglage du plateau supérieur (10') qui permet d'obtenir la distance entre viroles désirée. L'animation du plateau supérieur est faite par un moteur asynchrone (11) triphasé, accouplé à un vis (12), dont le pas est de 5 mm et accouplée' à un écrou (13), permettant le déplacement du plateau supérieur (10'). L'alimentation du moteur (11) est faite par l'intermédiaire d'un variateur de fréquence, piloté par une sortie analogique de l'automate. Un codeur absolu (14) contrôle en permanence la position du plateau supérieur (10'). Deux capteurs (15) permettent de limiter le déplacement de l'ensemble plateau-viroles, ensemble qu'un frein (16) immobilise après positionnement.

Le plateau supérieur (10') étant en place ainsi que la virole supérieure sélectionnée, l'ensemble monté E est alors précentré dans le sens longitudinal, référencé comme étant le sens d'avancement de l'ensemble sur le convoyeur (1) à rouleaux. L'ensemble E passe devant une cellule photo-électrique (17), et il est possible d'enregistrer le temps d'occultation de la cellule. Connaissant le temps, à vitesse constante connue, nécessaire pour parcourir la distance longitudinale séparant la cellule (17) de l'axe vertical commun des viroles (4') et (4''), l'automate U calcule le temps d'avancement restant à effectuer après passage complet devant la cellule, et transmet l'ordre au moteur d'entraînement des rouleaux du convoyeur (1), moteur qui s'arrête dès que l'axe de l'ensemble monté E est sensiblement confondu avec l'axe des viroles.

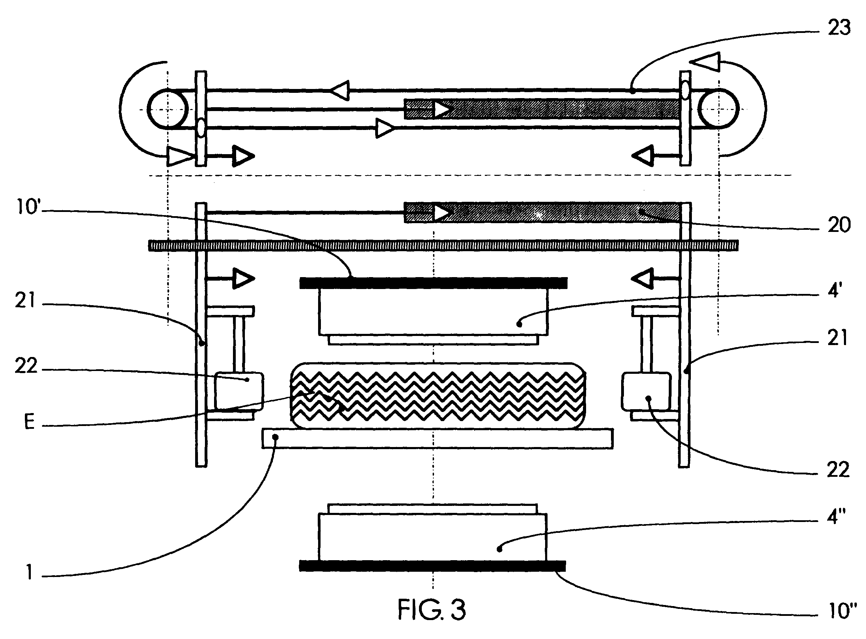

Le centrage proprement dit, qui doit conduire à l'alignement parfait de l'axe de rotation de l'ensemble monté E avec l'axe XX' des viroles inférieure (4') et supérieure (4'') sélectionnées, est obtenue par un dispositif secondaire de préhension et de maintien dans l'espace de l'ensemble monté E traité (figure 3). Ce dispositif secondaire ou pince de centrage (P) est animé par deux vérins pneumatiques (20) et comprend deux supports (21), chacun de ces supports portant deux galets centreurs (22). Une courroie crantée (23) relie les deux supports (21) et oblige les mouvements horizontaux des galets (22) à être symétriques par rapport à l'axe des viroles. Les quatre galets (22) enserrent l'ensemble monté E par l'intermédiaire de la bande de roulement de façon à pouvoir le maintenir dans l'espace. Chaque galet centreur (22) est complété par un détecteur (24) ayant mission de constater la présence de l'ensemble monté : si ledit ensemble est mal centré, un ou plusieurs détecteurs (24) sont inopérants et la machine s'arrête.

L'automate U dirige alors l'opération suivante, consistant à abaisser une partie du convoyeur (1) à rouleaux, partie se trouvant au-dessous de l'ensemble E, pour permettre la montée axiale de l'ensemble du plateau inférieur (10'') et de ces viroles (4''), l'escamotage de ladite partie se réalisant par rotation des supports (30) de convoyeur (1) au moyens de vérins (31). L'ensemble monté E étant en place et le chemin étant libre, la montée axiale du plateau inférieur (10''), auquel est en particulier rattachée la virole inférieure (4'') sélectionnée, est alors effectuée au moyen d'un vérin hydraulique (40) alimenté par une centrale locale (non montrée), comprenant un moteur entraînant une pompe hydraulique. Le traitement de l'ensemble monté E consiste à faire monter le plateau inférieur (10'') jusqu'à butée du vérin, quelles soient les résistances rencontrées. En effet, la virole inférieure cylindrique (4'') prend contact avec le flanc inférieur du pneumatique, soutient l'ensemble pneumatique- roue- galets, le déplace axialement jusqu'à obtention de la distance entre viroles (4) commandée par l'automate (2), le déplacement étant rendu possible par la mobilité axiale des galets (22) autour de leurs axes verticaux. De manière avantageuse, un manocontact permet de mesurer la pression dans le système de poussée, pression qui est fonction de la résistance à l'enfoncement des flancs du pneumatique, résistance due à la pression interne dudit pneumatique. Aussi est-il possible de détecter le sous-gonflage d'ensemble E traité et de le rejeter.

Il est évident que la machine décrite ci-dessus est conçue pour pouvoir être commandée manuellement : la rentrée et sortie des viroles, leurs verrouillages et déverrouillages, la marche du convoyeur, son ouverture et sa fermeture, le centrage, la montée et descente du plateau supérieur, la montée et descente du plateau inférieur peuvent être commandées par l'opérateur. Il en est de même de l'affichage de la distance entre viroles après compression, et de la distance axiale devant être parcourue par le plateau supérieur, qui peut être réalisé par l'opérateur.

Il reste évident que toutes les opérations décrites pour le traitement de l'ensemble monté E sont ensuite réalisées en sens inverse pour revenir à l'état initial, une fois l'ensemble traité éjecté et avant le commencement du traitement d'un nouvel ensemble. Dans le cas du traitement d'une série de pneumatiques montés ayant le même code d'identification, la machine de mise en place permet de conserver l'intégralité des réglages sélectionnés.

## Revendications

1. Machine, pour la mise en place correcte des bourrelets d'un pneumatique monté sur sa jante de service et gonflé, et utilisant le principe consistant à appliquer sur chaque flanc dudit pneumatique une force de compression, caractérisée en ce qu'elle comporte deux plateaux (10'), (10''), respectivement inférieur et supérieur, munis chacun d'au moins deux viroles cylindriques coaxiales (4), de diamètres différents et mobiles axialement de manière indépendante, ainsi que des moyens qui, en fonction de la dimension du pneumatique de l'ensemble monté à traiter, permettent d'une part la sélection, parmi l'ensemble des viroles supérieures (4') et inférieures (4'') des deux viroles appropriées respectivement du plateau supérieur (10') et du plateau inférieur (10''), et d'autre part le réglage de la distance axiale entre les deux viroles sélectionnées agissant sur les flancs opposés du pneumatique nécessaire et suffisante pour la compression voulue desdits flancs.

2. Machine selon la revendication 1, caractérisée en ce que les moyens permettant la sélection et le réglage comprennent :
- des moyens d'identification de l'ensemble monté à traiter,
- une unité centrale de traitement et de commande U, permettant de recevoir les données prélevées, de les comparer avec des données de mise en oeuvre de la machine préétablies et mémorisées, d'identifier les viroles (A, B, C) à utiliser et la distance axiale entre virole inférieure (4'') et virole supérieure (4') à respecter en fonction de la dimension à traiter, ainsi que de commander les dispositifs de mise en place (3, 5, 7) des viroles sélectionnées par rapport aux autres, et les dispositifs (11, 12, 13) de réglage de la distance axiale entre les viroles sélectionnées,
- les dispositifs de mise en place (3, 5, 7) et de réglage (11, 12, 13) eux-mêmes.

3. Machine selon la revendication 2, caractérisée en ce que l'unité centrale de traitement et de commande est un automate U à base de microprocesseurs, programmable et programmé.

4. Machine selon la revendication 2, caractérisée en ce que les dispositifs de mise en place des viroles sélectionnées comprend trois vérins pneumatiques (5) par virole, permettant le déplacement axial des viroles sélectionnées par rapport aux autres viroles, et trois vérins (7) agissant horizontalement permettant le verrouillage desdites viroles sélectionnées.

5. Machine selon la revendication 2, caractérisée en ce que le dispositif de réglage de la distance axiale entre viroles est un écrou (13) dont la vis (12) est entraînée par un moteur asynchrone (11), permettant de faire parcourir au plateau supérieur (10') la distance axiale désirée.

6. Machine selon l'une des revendications 1 à 5, caractérisée en ce qu'elle comprend en outre des moyens d'acheminement et d'évacuation (1) des ensembles montés E à traiter, lesdits ensembles étant sur lesdits moyens soumis à un précentrage ainsi qu'à un centrage par rapport aux deux viroles sélectionnées au moyen d'un système de centrage, de préhension et de maintien P de l'ensemble monté.

7. Machine selon la revendication 6, caractérisée en ce que le système de centrage P comprend deux supports (21), pouvant se déplacer au moyen de vérins pneumatiques (20), lesdits supports portant chacun deux galets centreurs (22), et étant reliés par une courroie crantée (23), qui oblige les mouvements horizontaux des galets (22) à être symétriques par rapport à l'axe des viroles.

8. Procédé destiné à la mise en place correcte des bourrelets d'un pneumatique gonflé, utilisant le principe consistant à appliquer sur chaque flanc dudit pneumatique une force de compression, caractérisé en ce que :
- l'on identifie l'ensemble monté E appelé à être traité,
- l'on sélectionne les viroles inférieure (4'') et supérieure (4'), et la distance axiale entre les deux viroles qui devra exister lors de la mise en compression des flancs du pneumatique de l'ensemble monté E,
- l'on achemine et centre l'ensemble monté de manière à ce que son axe de rotation coïncide avec l'axe commun des viroles inférieure et supérieure, ledit ensemble étant maintenu dans l'espace par l'intermédiaire de la bande de roulement du pneumatique et/ou de la roue,
- l'on met en place la virole axialement supérieure et l'on déplace axialement la virole inférieure de manière à comprimer les deux flancs du pneumatique pendant un temps donné,
- l'on écarte les viroles, repose l'ensemble monté sur la table d'évacuation, et évacue l'ensemble.

## Claims

1. A machine for correctly positioning the beads of a tyre mounted on its operating rim and inflated, and using the principle of applying to each sidewall of said tyre a compressive load, characterised in that it comprises two plates (10'), (10''), one upper and one lower respectively, each provided with at least two coaxial cylindrical rings (4), of different diameters and axially movable independently, and also means which, according to the dimension of the tyre of the mounted assembly to be treated, permit firstly the selection from among all the upper (4') and lower (4'') rings of the appropriate two rings respectively of the upper plate (10') and of the lower plate (10''), and secondly the adjustment of the axial distance between the two rings selected acting on the opposite sidewalls of the tyre, which distance is necessary and sufficient for the desired compression of said sidewalls.

2. A machine according to Claim 1, characterised in that the means permitting the selection and the adjustment comprise:
- means for identifying the mounted assembly to be treated,
- a central processing and control unit U, which makes it possible to receive the data collected, to compare them with pre-established, stored implementation data of the machine, to identify the rings (A, B, C) to be used and the axial distance between the lower ring (4'') and the upper ring (4') to be maintained as a function of the dimension to be treated, and also to control the positioning devices (3, 5, 7) for the rings selected with respect to the others, and the devices (11, 12, 13) for adjusting the axial distance between the rings selected,
- the positioning devices (3, 5, 7) and the adjustment devices (11, 12, 13) themselves.

3. A machine according to Claim 2, characterised in that the central processing and control unit is a microprocessor-based controller U which is programmable and programmed.

4. A machine according to Claim 2, characterised in that the positioning devices for the rings selected comprise three pneumatic piston-cylinder units (5) per ring, which permits the axial displacement of the rings selected relative to the other rings, and three piston-cylinder units (7) acting horizontally which permit the locking of said selected rings.

5. A machine according to Claim 2, characterised in that the device for adjusting the axial distance between rings is a nut (13), the screw (12) of which is driven by an asynchronous motor (11), which makes it possible to make the upper plate (10') cover the desired axial distance.

6. A machine according to one of Claims 1 to 5, characterised in that it furthermore comprises means (1) for feeding and removing the mounted assemblies E to be treated, said assemblies being subjected on said means to pre-centring and also to centring relative to the two rings selected by means of a system P for centring, gripping and holding the mounted assembly.

7. A machine according to Claim 6, characterised in that the centring system P comprises two supports (21) which can be displaced by means of pneumatic piston-cylinder units (20), each of said supports bearing two centring rollers (22), and being connected by a notched belt (23) which forces the horizontal movements of the rollers (22) to be symmetrical to the axis of the rings.

8. A method intended for the correct positioning of the beads of an inflated tyre using the principle consisting in applying a compressive load to each sidewall of said tyre, characterised in that:
- the mounted assembly E to be treated is identified,
- the lower (4'') and upper (4') rings, and the axial distance between the two rings which will have to exist during the compression of the sidewalls of the tyre of the mounted assembly E, are selected,
- the mounted assembly is fed in and centred such that the axis of rotation thereof coincides with the common axis of the lower and upper rings, said assembly being held in space by means of the tread of the tyre and/or of the wheel,
- the axially upper ring is positioned and the lower ring is displaced axially so as to compress the two sidewalls of the tyre for a given time,
- the rings are moved apart, the mounted assembly is laid on the exit table, and the assembly is removed.

## Patentansprüche

1. Maschine zum korrekten Anordnen der Wülste eines Reifens, der auf seiner Betriebsfelge montiert und aufgepumpt ist, unter Nutzung des Prinzips, das darin besteht, auf jede Flanke des genannten Reifens eine Druckkraft auszuüben, dadurch gekennzeichnet, daß sie zwei Teller (10'), (10'') aufweist, und zwar einen unteren bzw. oberen, die jeweils mit mindestens zwei zylindrischen koaxialen Ringen (4) versehen sind, die unterschiedliche Durchmesser aufweisen und unabhängig axial beweglich sind, sowie Mittel, die in Funktion der Abmessung des Reifens der zu behandelnden, montierten Anordnung einerseits unter der Gruppe von oberen Ringen (4') und unteren Ringen (4'') die Auswahl zweier jeweils geeigneter Ringe des oberen Tellers (10') und des unteren Tellers (10'') und andererseits die Regulierung des axialen Abstands zwischen den beiden ausgewählten Ringen gestatten, die auf die gegenüberliegenden Flanken des Reifens einwirken, der notwendig und ausreichend für die gewünschte Zusammendrückung der genannten Flanken ist.

2. Maschine nach Anspruch 1, dadurch gekennzeichnet, daß die Mittel, die die Auswahl und Regulierung gestatten, folgende Merkmale aufweisen:
- Mittel zur Identifizierung der montierten, zu behandelnden Anordnung,
- eine Zentraleinheit zur Behandlung und Steuerung U, die es gestattet, die entnommenen Angaben zu empfangen, sie mit vorher festgesetzten und eingespeicherten Angaben zur Inbetriebnahme der Maschine zu vergleichen, die zu benutzenden Ringe (A,B,C) und den Abstand zwischen dem unteren Ring (4'') und dem oberen Ring (4') zu identifizieren, der in Funktion der zu behandelnden Abmessung zu beachten ist, sowie die Vorrichtungen zur Anordnung (3,5,7) der ausgewählten Ringe in Bezug aufeinander und die Vorrichtungen (11,12,13) zum Einregulieren des Axialabstands zwischen den ausgewählten Ringen anzusteuern, und
- die Vorrichtungen für Anordnungen (3,5,7) und zum Einregulieren (11,12,13) ihrerseits.

3. Maschine nach Anspruch 2, dadurch gekennzeichnet, daß die Zentraleinheit zur Behandlung und zur Steuerung ein Automat U auf der Grundlage von Mikroprozessoren ist, der programmierbar und programmiert ist.

4. Maschine nach Anspruch 2, dadurch gekennzeichnet, daß die Vorrichtungen zur Anordnung der ausgewählten Ringe drei pneumatische Zylinder (5) pro Ring aufweist, die die axiale Verlagerung der ausgewählten Ringe in Bezug auf die anderen Ringe gestatten, sowie drei Zylinder (7), die horizontal wirken und die Verriegelung der genannten, ausgewählten Ringe gestatten.

5. Maschine nach Anspruch 2, dadurch gekennzeichnet, daß die Vorrichtung zum Einregulieren des Axialabstandes zwischen den Ringen eine Mutter (13) ist, deren Schraubenspindel (12) durch einen Asynchronmotor (11) angetrieben ist, der es gestattet, auf dem oberen Teller (10') die gewünschte, axiale Strecke zurücklegen zu lassen.

6. Maschine nach einem der Ansprüche 1 bis 5, dadurch gekennzeichnet, daß sie außerdem Mittel zum Heranbringen und zum Entfernen (1) der montierten, zu behandelnden Anordnungen E aufweist, wobei die genannten Anordnungen auf den genannten Mitteln einer Vorzentrierung sowie einer Zentrierung in Bezug auf die zwei ausgewählten Ringe unterzogen sind, mittels eines Systems zur Zentrierung, zum Ergreifen und zum Halten P der montierten Anordnung.

7. Maschine nach Anspruch 6, dadurch gekennzeichnet, daß das Zentriersystem P zwei Träger (21) aufweist, die sich mittels pneumatischer Zyinder (20) verlagern können, wobei die genannten Träger jeweils zwei Zentrierrollen (22) tragen und durch einen Keilriemen (23) verbunden sind, der die horizontalen Bewegungen der Rollen (22) dazu zwingt, in Bezug auf die Achse der Ringe symmetrisch zu sein.

8. Verfahren, das zur ordnungsgemäßen Anordnung der Wülste eines aufgepumpten Reifens bestimmt ist, unter Nutzung des Prinzips, das darin besteht, auf jede Flanke des genannten Reifens eine Druckkraft auszuüben, dadurch gekennzeichnet, daß:
- man die montierte Anordnung E identifiziert, die dazu bestimmt ist, behandelt zu werden,
- man den unteren Ring (4'') und den oberen Ring (4') sowie den axialen Abstand zwischen den beiden Ringen auswählt, der während der Aufbringung der Druckkraft auf die Flanken des Reifens der montierten Anordnung E vorliegen muß,
- man die montierte Anordnung derart heranführt und zentriert, daß ihre Drehachse mit der gemeinsamen Achse des unteren und oberen Rings zusammenfällt, wobei die genannte Anordnung in dem Raum mittels der Lauffläche des Reifens und/oder des Rades gehalten wird,
- man den axial oberen Ring anordnet und man den unteren Ring axial derart verlagert, daß die beiden Flanken des Reifens während einer vorgegebenen Zeit zusammengedrückt werden, und
- man die Ringe auseinanderfährt, die montierte Anordnung auf dem Entnahmetisch auflegt und die Anordnung entnimmt.
